# EUROPEAN PATENT APPLICATION

(11) **EP 4 496 158 A1**
(43) Date of publication of application: **22.01.2025**
(21) Application number: 23190671.0
(22) Date of filing: 09.08.2023
(51) Int. Cl.: H01T 4/04, H01T 4/06, H01C 7/12, H01T 4/08

(54) **OVERVOLTAGE PROTECTION WITH INSULATING SPARK GAP IN BASE**

(30) Priority: 19.07.2023 CZ 202341156 U
(71) Applicant: SALTEK s.r.o., 40007 Usti nad Labem (CZ)
(72) Inventor: TOMAN, Vladimír, 41181 Brozany nad Ohri (CZ); KOMRSKA, David, 25244 Psary (CZ)
(74) Representative: Kratochvil, Vaclav

(57) **Abstract**

Overvoltage protection with insulating spark gap in the U-shaped base (1) comprising earthing clamps (5) and phase clamps (4) and at least two replaceable protection modules (2) with contacts for insertion into holes in inputs (3) of the phase clamps (4) and into the holes in a jumper (7), to which one end of an insulating spark gap (6) is electrically connected, wherein the other end of the insulating spark gap (6) is connected via a strip (8) and/or a screw and/or a solder to at least one earthing clamp (5). The connection is made with an electrically conductive connection, wherein an axis (10) of the insulating spark gap (6) is at perpendicular direction to the upper surface of the jumper (7).

## Description

### Technical Field

The invention relates to the protection against the effects of overvoltage of equipment including devices and components thereof using the electrical distribution power system for its function, preferably electrical equipment and devices connected to the IT electrical distribution power system.

### Background Art

In places where high reliability of operation is required, such as operating theatres and intensive care units in hospitals, military defense systems, mines, metallurgical plants, etc., isolated power systems are used to power electrical and electronic devices. To protect these devices, surge arresters with replaceable protection modules containing metal oxide varistors are installed obligatorily. These voltage-dependent protection elements have a constant leakage current that increases with time and can affect the operation of protected devices. The common node of the exchange modules is therefore not connected directly to the protective earth, but via a suitable insulating spark gap.

Known product solutions are described in many non-patent publicly available documents of a number of overvoltage protection manufacturers. All these products have an insulating spark gap located in another exchange module. The disadvantage of this solution is that the device is wider and unnecessarily takes up space in the switchboard and for large systems it is necessary to choose a bigger, i.e. more expensive switchboard.

Regarding patent documents, a similar solution is described, for example, in EP 1587188. The invention relates to a surge protection device for the protection of low-voltage electrical systems, consisting of a lower part with clamps for phase conductors (L1, L2, L3) and a neutral conductor (PE, N) and of several plug-in modules containing a varistor type surge protection component. The separating spark gap can be placed in one of the plug-in modules.

A similar technical solution disclosed in document DE 202004005491 relates to a surge protection device for the protection of low-voltage electrical systems, consisting of a lower part with clamps for phase conductors (L1, L2, L3) and an earthing conductor or neutral conductor (PE, N) and of at least one surge protection component with one arrester, usually a discharge tube and/or a surge arrester, in a plug-in module.

Other well-known commercially available solutions use single-pole protection components connected into a single unit via external conductors. The disadvantage of the need for additional space in the switchboard remains. A significant disadvantage of these solutions is that the interconnecting conductors increase the level of protection through their inductance, and thus the connected devices are stressed by higher residual voltage.

### Summary of Invention

The invention is defined in claim 1. The aforementioned shortcomings are largely remedied by an overvoltage protection with an insulating spark gap including a U-shaped base with earthing clamps and phase clamps and at least two replaceable protection modules with contacts for insertion into the holes in the phase clamp inputs and into the holes in the jumper to which one end of the insulating spark gap is electrically connected according to this invention. The essence of which is that the other end of the separation spark gap is electrically connected via a strip to at least one earthing clamp, wherein the axis of the separation spark gap is perpendicular to the upper surface of the jumper.

The separating spark gap is advantageously formed by a gas discharge tube. Advantageously, there is a resistor connected to the insulating spark gap parallel with its axis, wherein its resistance lies in the range of 3 MΩ to 4 MΩ, and/or there is a capacitor with a capacitance value in the range of 0.5 nF to 3 nF connected to the insulating spark gap in parallel.

The electrical connection between the insulating spark gap and the jumper and the strip can be formed through an electrically conductive connection, e.g. screw, solder or other.

The strip can be adapted as necessary for easy mounting to earthing clamps; in an advantageous embodiment the strip is part of the separating spark gap and forms a single unit with it.

In an even more advantageous embodiment, the strip is included in the earthing clamp.

### Brief Description of Drawings

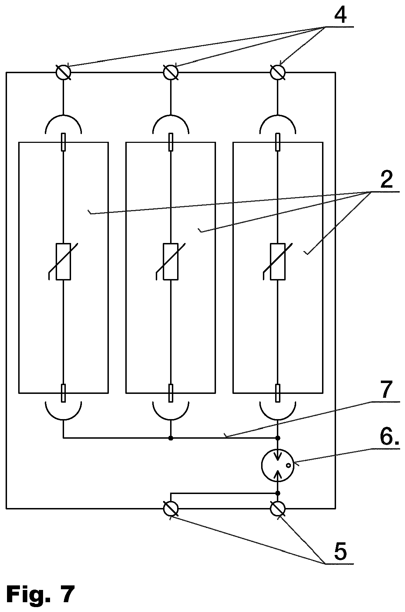

The invention will be further explained on a specific example of an embodiment with the help of figures, in which Fig. 1 shows an overvoltage protection with three replaceable modules with protection elements, a base with three phase clamps, two earthing clamps and an integrated insulating spark gap hidden under the top cover. Fig. 2 shows the surge protection base without the top cover with three phase clamps, three phase clamp inputs, jumper, two earthing clamps with a mounted strip and an integrated insulating spark gap. Fig. 3 offers a different view of the surge protection base without the top cover. Fig. 4 shows the advantageous embodiment of the electrically conductive soldered connection of the strip and the insulating spark gap forming one unit. Fig. 5 shows the base with the space created for the insulating spark gap and the strip included in the earthing clamp. Fig. 6 shows the protection module with two protruding contacts. Fig. 7 shows the circuit diagram of the overvoltage protection connected according to this document.

### Examples of Invention Embodiments

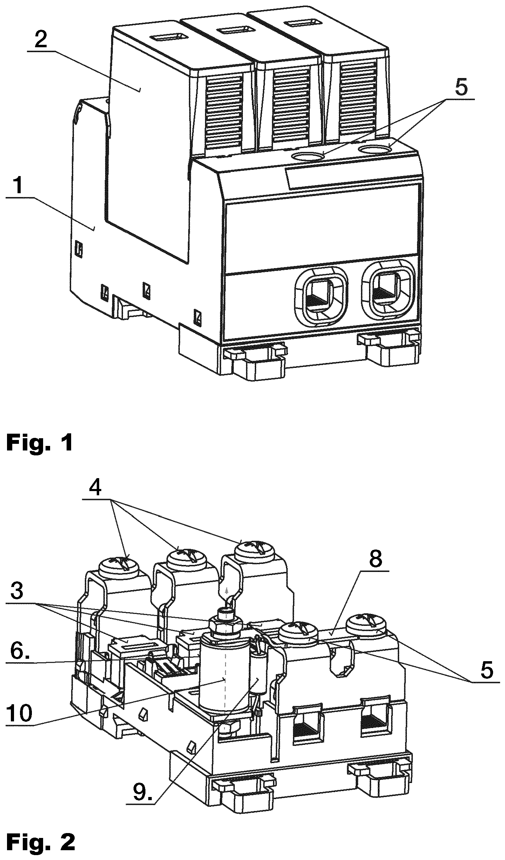

An example of a surge protection arrangement with an insulating spark gap integrated in the base is shown from the axonometric perspective in Fig. 1. The overvoltage protection includes a U-shaped base 1, adapted on the underside to be mounted on a DIN rail, and several replaceable protection modules 2 with contacts inserted into the holes in inputs 3 through which they are electrically connected to phase clamps 4, usually located on the upper arm of the U-shape to allow the connection of the overvoltage protection to phase conductors L1, L2 and L3. Opposing contacts of the replaceable protection modules 2 are inserted into the holes in the jumper 7, which is also electrically connected to one end of the insulating spark gap 6, the second end of which is electrically connected via the strip 8 to at least one earthing clamp 5 located in the lower arm of the U-shape for the protective earthing conductor, wherein the axis 10 of the insulating spark gap 6 is perpendicular to the upper surface of the jumper 7.

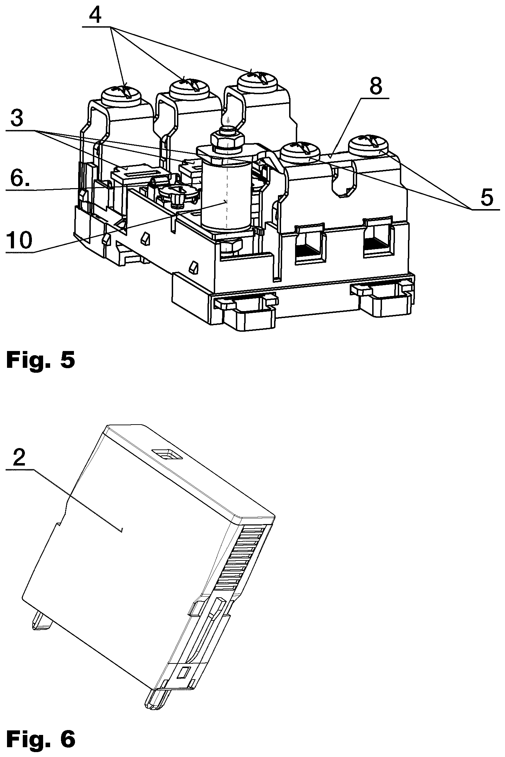

The electrically conductive connection between the insulating spark gap 6 and the jumper 7 and the strip 8 is advantageously made via a screw connection and is shown in Fig. 2, 3 and 5.

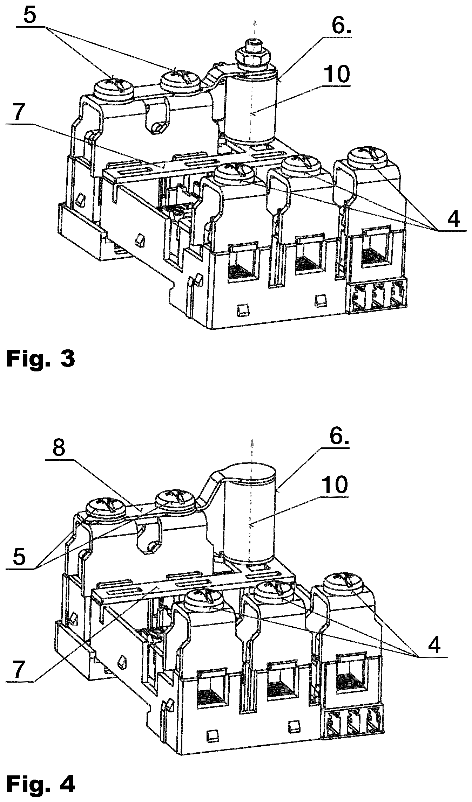

In another embodiment, shown on Fig. 4, the strip 8 is connected to the insulating spark gap 6 by soldering.

The insulating spark gap 6 is usually formed by a gas discharge tube with a protective atmosphere provided with screw clamp blocks and/or solder surfaces at each end for this purpose.

The insulating spark gap 6 can also be formed by non-linear voltage-dependent switching elements which operate on the principle of electrical discharge in an environment without a protective atmosphere, consisting usually of two or more electrodes in an insulating housing, eventually supplemented by an inclusion of electronic circuits enabling controlled initiation of the spark gap.

As part of this invention, the embodiments described above are collectively referred to as an insulating spark gap, without the invention being limited to any specific type of an insulating spark gap.

In the embodiment of surge protection 1 shown in the figures, phase clamps 4 and earthing clamps 5 are designed as screw clamp blocks. However, phase clamps 4 and earthing clamps 5 can also be designed without screw clamp blocks, also called spring clamps, or spring-cage clamps. In such clamps, the conductor is held by spring pressure instead of the pressure generated by the screw.

Protection module 2 usually includes a varistor-based protection element. A combination of series circuit with the varistor and gas discharge tube or controlled spark gap is also applicable.

### Industrial Applicability

The overvoltage protection with insulating spark gap integrated in the base can be used to protect electrical equipment and devices or their components connected to the electrical grid from the effects of surges in places where high reliability of operation is required, such as operating theatres and intensive care units in hospitals, military defense systems, mines, metallurgical plants, etc. while offering significant savings in investment costs.

### Reference Signs List

| | |
|---|---|
| base | 1 |
| protection module | 2 |
| input | 3 |
| phase clamp | 4 |
| earthing clamp | 5 |
| insulating spark gap | 6 |
| jumper | 7 |
| strip | 8 |
| resistor | 9 |
| axis | 10 |

## Claims

1. Overvoltage protection with insulating spark gap in the U-shaped base (1) comprising earthing clamps (5) and phase clamps (4) and at least two replaceable protection modules (2) with contacts for insertion into holes in inputs (3) of the phase clamps (4) and into the holes in a jumper (7), to which one end of an insulating spark gap (6) is electrically connected, wherein the other end of the insulating spark gap (6) is connected via a strip (8) and/or a screw and/or a solder to at least one earthing clamp (5), ***characterized in that*** the connection is made with an electrically conductive connection, wherein an axis (10) of the insulating spark gap (6) is at perpendicular direction to the upper surface of the jumper (7).

2. Overvoltage protection according to claim 1, ***characterized in that*** the insulating spark gap (6) is formed by a nonlinear voltage-dependent switching element.

3. Overvoltage protection according to claim 2, ***characterized in that*** the nonlinear voltage dependent element is a discharge tube.

4. Overvoltage protection according to claim 3, ***characterized in that*** the discharge tube is of a gas type.

5. Overvoltage protection according to any of claims 1 to 4, ***characterized in that*** there is a resistor (9) connected to the insulating spark gap (6) in parallel, wherein its resistance lies in the range of 3 MΩ to 4 MΩ, and/or there is a capacitor with a capacitance value in the range of 0.5nF to 3nF connected to the insulating spark gap (6) in parallel.

6. Overvoltage protection according to any of claims 1 to 5, ***characterized in that*** the strip (8) is a part of the insulating spark gap (6).

7. Overvoltage protection according to any of claims 1 to 5, ***characterized in that*** the strip (8) is a part of the earthing clamp (5).
